# EUROPEAN PATENT SPECIFICATION

(11) **EP 1 761 152 B1**
(45) Date of publication and mention of the grant of the patent: **02.12.2009**
(21) Application number: 05751852.4
(22) Date of filing: 15.06.2005
(51) Int. Cl.: A47J 31/40, A47J 31/44, A47G 19/14, A47J 45/06

(54) **A COFFEE MACHINE**
KAFFEEMASCHINE
MACHINE A CAFE

(30) Priority: 18.06.2004 TR 200401452
(43) Date of publication of application: 14.03.2007
(73) Proprietor: ARCELIK ANONIM SIRKETI, 34950 Istanbul (TR)
(72) Inventor: HASANREISOGLU, Levent, Tuzla 34950 Istanbul (TR); SIMSIR, Bogac, Tuzla 34950 Istanbul (TR); BUYUKCAN, Erdem, Tuzla 34950 Istanbul (TR)
(86) International application number: PCT/IB2005/051977
(87) International publication number: WO 2005/122850

(56) References cited:
- WO-A-2004/036509
- DE-A1- 19 623 250
- US-A- 5 158 793
- US-A1- 2002 020 300

## Description

This invention relates to a coffee machine used for preparing Turkish coffee. Document DE-A-19 623 250 shows such a machine.

In order to prepare Turkish coffee in accordance with its traditional flavor, the mixture obtained by adding finely-ground coffee, sugar and cold water in desired amounts in a heating pot with a heating surface as wide as possible similar to a coffee pot, should be stirred effectively, heated slowly and served in the cups just before it reaches the boiling point while foam starts to form. The methods used in an automatic coffee machine for preparing Turkish coffee with traditional flavor and appearance should be similar with the conventional methods. There are several Turkish coffee machines manufactured wherein conventional coffee making methods are utilized, however they do not provide the flavor and consistency of Turkish coffee the way consumers demand.

Turkish coffee may be preferred with low, medium or high sugar content, or without sugar, namely black. In a situation where more than one person wants to drink different types of Turkish coffee, each mentioned type of Turkish coffee should be prepared in different pots. Since sugar is added to different taste Turkish coffees which are prepared in different pots before cooking, the preparer might not be able to distinguish them.

The aim of the present invention is the realization of a coffee machine which is used to automatically cook Turkish coffee in a short amount of time in accordance with its traditional flavor and consistency wherein means are provided to prepare different types of Turkish coffee without mixing them up.

The coffee machine realized in order to attain above mentioned aim of the present invention is illustrated in the attached figures where:

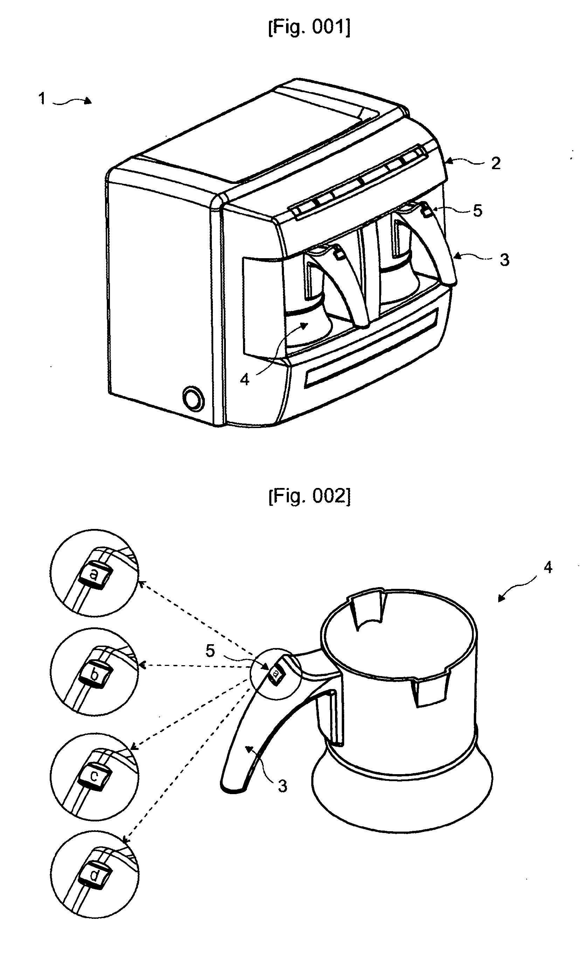

Fig.1 - is a perspective view of a coffee machine.
Fig.2 - is a perspective view of a cooking chamber and of options which are set by using a reminder positioned on the handle.

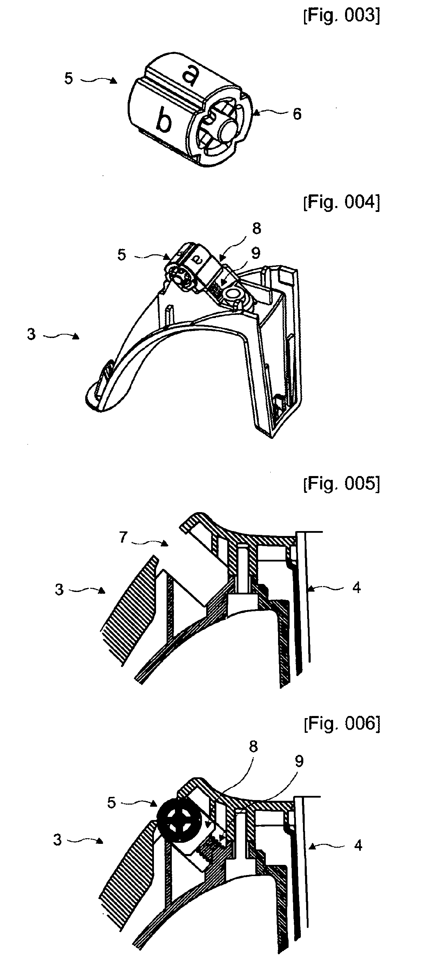

Fig.3 - is a perspective view of a reminder.
Fig.4 - is a perspective view of a handle of a cooking chamber.
Fig.5 - is a detailed sectional view of a handle without a reminder positioned on it.
Fig.6 - is a detailed sectional view of a handle with a reminder positioned on it.

The elements shown in figures are numbered individually as follows:
1. Coffee machine
2. Body
3. Handle
4. Cooking chamber
5. Reminder
6. Indicator
7. Window
8. Bearing piece
9. Spring

The coffee machine (1) comprises a body (2), one or more than one attachable /detachable cooking chamber (4) which comprises a handle (3) and where several ingredients, such as coffee or sugar if preferred, that are to be cooked are added in, one or more than one reminder (5) which is adjusted according to the types of desired beverage, preferably Turkish coffee, and is used to remind which type of beverage is prepared inside the cooking chamber (4) depending on the amounts of such ingredients as coffee, sugar that are put into the mentioned cooking chamber (4) earlier, in order to prepare the beverage.

The reminder (5) is positioned on the handle (3) in the coffee machine (1), so as to indicate which type of beverage is prepared inside each cooking chamber (4) separately, where cooking is performed.

The reminder (5) comprises several symbols (a, b, c, d) denoting the type of the beverage prepared in each cooking chamber (4). Letters, words or figures indicating the type of prepared beverage are used as symbols.

In the preferred embodiment of the present invention, the reminder (5) is in a cylindrical form and comprises more than one indicator (6) with a projecting structure whereby the reminder (5) can easily be rotated and where 'black', 'low', 'medium' and 'high' words are written on, as symbols (a, b, c, d) reminding the types of Turkish coffee to the user. The reminder (5) is positioned on the handle (3), is rotated around a horizontal axis with respect to the cooking chamber (4) which is held vertical, and thereby it is achieved that the user can both carry the cooking chamber (4) by grasping the handle (3) and easily rotate the reminder (5) with one hand.

The handle (3) incorporates a window (7) whereby the symbols (a, b, c, d) on the indicator (6) are seen, a bearing piece (8) where the reminder (5) is rotated on and, a spring (9) whereby the reminder button (5) is rotated by the user via gently pushing the indicators (6) and whereby the indicator (6) on which the chosen symbol (a, b, c, d) is located fits to the window (7).

In the preferred embodiment of the present invention, by rotating the reminder (5) after adding different amounts of coffee and sugar into cooking chambers (4) in order to prepare different types of Turkish coffee as desired, the user ensures that the indicator (6) is moved to a visible position by bringing it to the level of the window (7) which indicator (6) has one of the words 'black', 'low', 'medium', or 'high' defining the type of Turkish coffee according to which ingredients are added into the cooking chambers (4).

By means of the reminder button (5), especially in crowded places such as hotels, restaurants or cafes where there is a continuous demand for various types of Turkish coffee, it is achieved that different types of Turkish coffee prepared in automatic coffee machines (1) where more than one cooking chamber (4) is utilized, are served to correct demanders without getting them mixed up.

## Claims

1. A coffee machine (1) comprising;
- a body (2),
- one or more than one attachable / detachable cooking chamber (4) comprising a handle (3) and where several ingredients, such as coffee or sugar if preferred, that are to be cooked are added in,
and **characterized by** one or more than one reminder (5),
- which is adjusted according to the types of desired beverage and is used to remind the type of beverage prepared inside the cooking chamber (4) depending on the amounts of such ingredients as coffee, sugar that are put into the mentioned cooking chamber (4) earlier, in order to prepare the beverage,
- the said reminder (5) is positioned on the handle (3), is in a cylindrical form, and comprises several symbols (a, b, c, d) such as letters, words or figures denoting the type of the beverage prepared in each cooking chamber (4),
- the said reminder (5) comprising more than one indicator (6), with a projecting structure, on which the symbols (a, b, c, d) are positioned, whereby the reminder (5) can easily be rotated
- and the handle (3) incorporating a window (7) whereby the symbols (a, b, c, d) on the indicator (6) are seen,
- the said handle (3) incorporating a bearing piece (8) on which the reminder (5) is rotated and a spring (9) whereby the reminder (5) is rotated by the user via gently pushing the indicators (6) and whereby the indicator (6) on which the chosen symbol (a, b, c, d) is located fits to the window (7).

2. A coffee machine (1) as described in Claim 1, **characterized by** the reminder (5) where 'black', 'low', 'medium' and 'high' words are written on, as symbols (a, b, c, d) reminding the types of Turkish coffee to the user.

3. A coffee machine (1) as described in Claims 1 or 2, **characterized by** the reminder (5) that is rotated about a horizontal axis with respect to the cooking chamber (4) held vertical.

## Patentansprüche

1. Kaffeemaschine (1), umfassend:
- einen Körper (2),
- eine oder mehrere einsetzbare / herausnehmbare Brühkammern (4), umfassend einen Griff (3), in die mehrere zu brühende Zutaten wie Kaffee oder auf Wunsch Zucker gefüllt werden,
**gekennzeichnet durch** eine oder mehrere Erinnerungseinrichtungen (5),
- die je nach Art des gewünschten Getränks eingestellt werden, und dazu dienen, die Art des Getränks in Erinnerung zu rufen, das in der Brühkammer (4) zubereitet wird, abhängig von den Mengen an Zutaten wie Kaffee oder Zucker, die in die jeweilige Brühkammer gefüllt werden, um das Getränk zuzubereiten,
- wobei die Erinnerungseinrichtung (5) auf dem Griff (3) angeordnet ist, eine zylindrische Form aufweist, und mehrere Symbole (a, b, c, d) wie Buchstaben, Wörter oder Zahlen umfasst, die die Art des Getränks bezeichnen, das in jeder Brühkammer (4) zubereitet wird.
- wobei die Erinnerungseinrichtung (5) mehr als einen Indikator (6) mit einer vorspringenden Struktur umfasst, auf dem die Symbole (a, b, c, d) angeordnet sind, derart, dass sich die Erinnerungseinrichtung leicht drehen lässt,
und **durch** den Griff (3),
- der ein Fenster (7) aufweist, **durch** das die Symbole (a, b, c, d) auf dem Indikator (6) zu erkennen sind,
- wobei der Griff (3) ein Tragestück (8) aufweist, an dem die Erinnerungseinrichtung (5) gedreht wird, und eine Feder (9), wodurch die Erinnerungseinrichtung (5) vom Benutzer **durch** sanftes Drücken der Indikatoren (6) gedreht wird, und wodurch der Indikator (6), auf dem sich das ausgewählte Symbol (a, b, c, d) befindet, in das Fenster (7) gelangt.

2. Kaffeemaschine (1) nach Anspruch 1, **dadurch gekennzeichnet, dass** auf die Erinnerungseinrichtung (5) als die Symbole (a, b, c, d) die Angaben "ungesüßt", "schwach", "mittelsüß" und "gesüßt" geschrieben sind, um dem Benutzer die Art des türkischen Kaffees in Erinnerung zu rufen.

3. Kaffeemaschine (1) nach Anspruch 1 oder 2, **dadurch gekennzeichnet, dass** die Erinnerungseinrichtung (5) in Bezug auf die vertikal gehaltene Brühkammer (4) um eine horizontale Achse gedreht wird.

## Revendications

1. Un percolateur (1) comprenant;
- un corps (2),
- une ou plusieurs montable / démontable chambre de cuisson (4) qui comprends une poignée (3) et dans laquelle plusieurs ingrédients, comme café et sucre si l'on préfère, qui doivent être cuits sont ajoutés.
et **caractérisé par** un ou plusieurs rappel (5),
- qui est ajusté selon les types de boisson désiré et est utilisé pour rappeler le type de boisson préparé dans la chambre de cuisson (4) selon la quantité des ingrédients comme café, sucre qui sont mises dans ladite chambre de cuisson (4) auparavant pour préparer la boisson.
- ledit rappel (5) situé sur la poignée (3) est sous une forme cylindrique et compris plusieurs symboles (a, b, c, d) comme les lettres, mots ou figures indiquant le type de boisson préparé dans chaque chambre de cuisson (4).
- ledit rappel (5) comprenant plus d'un indicateur (6), sous une structure saillante, sur lequel les symboles (a, b, c, d) sont positionnés, selon laquelle le rappel (5) peut être tourné facilement
et par la poignée (3)
- qui comporte une fenêtre (7) par laquelle les symboles (a, b, c, d) sur l'indicateur (6) sont vus.
- ladite poignée (3) comportant une pièce de support (8) sur laquelle le rappel est tourné et un ressort par lequel le rappel (5) est tourné par l'utilisateur par poussant doucement les indicateurs (6) et par lequel l'indicateur (6) sur lequel le symbole choisi (a, b, c, d) est situé tient dans la fenêtre (7).

2. Un percolateur (1) selon la Revendication 1, **caractérisé par** le rappel (5) sur lequel les mots « pur », « moins », « moyen » et « sucré » sont inscrits, comme les symboles (a, b, c, d) rappelant les types de café turc à l'utilisateur.

3. Un percolateur (1) selon la Revendication 1 ou 2, **caractérisé par** le rappel (5) qui est tourné autour d'un axe horizontal à l'égard de la chambre de cuisson (4) verticale.
